# EUROPEAN PATENT APPLICATION

(11) **EP 3 288 256 A1**
(43) Date of publication of application: **28.02.2018**
(21) Application number: 15831208.2
(22) Date of filing: 06.08.2015
(51) Int. Cl.: H04N 5/44, H04N 21/485

(54) **METHOD FOR ADJUSTING DISPLAY PARAMETER, REMOTE CONTROL AND DISPLAY DEVICE**

(30) Priority: 23.03.2015 CN 201510127976
(71) Applicant: BOE Technology Group Co., Ltd., Beijing 100015 (CN); Beijing BOE Multimedia Technology Co., Ltd., Beijing 100015 (CN)
(72) Inventor: HE, Jianzi, Beijing 100176 (CN); GUO, Naijia, Beijing 100176 (CN)
(74) Representative: Isarpatent
(86) International application number: PCT/CN2015/086260
(87) International publication number: WO 2016/150068

(57) **Abstract**

The present disclosure relates to the technical field of displaying, and provides a method for adjusting display parameters, a remote controller and a display device to relieve a viewer from manually adjusting the display parameters. The method may include: transmitting, by a remote controller, an incoming signal to a display device, and receiving a signal reflected by the display device; obtaining, by the remote controller, a distance value between the remote controller and the display device based on a status difference between statuses of the incoming signal and the reflected signal, and transmitting the distance value to the display device; and receiving, by the display device, the distance value transmitted by the remote controller, and adjusting the display parameters based on the distance value.

## Description

### CROSS REFERENCE OF RELATED APPLICATION

The present application claims a priority of Chinese patent application No.201510127976.X filed on March 23, 2015, the disclosure of which is incorporated herein by reference in its entirety.

### TECHNICAL FIELD

The present disclosure relates to the technical field of displaying, and in particular to a method for adjusting display device, a remote controller and a display device.

### BACKGROUND

With the development of display technology, the display devices such as a television are becoming more widely used. The television is a device which may convert a received broadcasting signal into video information and audio information, and then present the video information and the audio information to an audience.

However, different display parameters may be appropriate for a television watcher depending on an orientation of the watcher upon watching the television. For example, as a distance between the watcher and the display device is further, the watcher may prefer backlight brightness of the television to be higher, screen brightness to be higher, contrast to be higher, scanning rate to be higher, and refresh rate to be faster. A visual effect of watching the television varies as the distance between the watcher and the television varies. At this point, the watcher may need to adjust the display parameters of the remote controller manually by a remote control to satisfy his watching requirements. During a process of adjusting the display parameters by the watcher, he has to repeatedly adjust each of the display parameters to achieve a satisfying display effect, which deteriorates user experience.

### SUMMARY

### (1) TECHNICAL PROBLEMS TO BE SOLVED

An object of the present disclosure is to provide a method for adjusting display parameters, a remote controller and a display device, so that it may relieve a viewer from manually adjusting the display parameters, and the display parameters of the display device may be adjusted intelligently.

### (2) TECHNICAL SOLUTIONS

For achieving the above object, the present disclosure provides following technical solutions.

In a first aspect of the present disclosure, it is provided a method for adjusting display parameters, including steps of:
transmitting, by a remote controller, an incoming signal to a display device, and receiving a signal reflected by the display device;
obtaining, by the remote controller, a distance value between the remote controller and the display device based on a status difference between statuses of the incoming signal and the reflected signal, and transmitting the distance value to the display device; and
receiving, by the display device, the distance value transmitted by the remote controller, and adjusting the display parameters based on the distance value.

In connection with the first aspect, in a first embodiment of the first aspect, the step of obtaining, by the remote controller, a distance value between the remote controller and the display device based on a statue difference between statuses of the incoming signal and the reflected signal may include a step of:
calculating, by the remote controller, the distance value between the remote controller and the display device based on an intensity difference between an intensity of the incoming signal being transmitted and an intensity of the reflected signal being received; or
calculating, by the remote controller, the distance value between the remote controller and the display device based on a time difference between a time point when the incoming signal is transmitted and a time point when the reflected signal is received.

In connection with the first aspect, in a second embodiment of the first aspect, mapping tables in one-to-one correspondence with intensities of different incoming signals may be stored in a storage unit of the remote controller, and each of the mapping tables may include a correspondence between intensities of the reflected signal and distance values;
wherein the step of obtaining, by the remote controller, a distance value between the remote controller and the display device based on a status difference between statuses of the incoming signal and the reflected signal may include a step of:
obtaining, by the remote controller, a mapping table corresponding to the intensity of the incoming signal from the mapping tables stored in the storage unit based on the intensity of the incoming signal, and searching for and obtaining the distance value corresponding to the intensity of the reflected signal from the obtained mapping table based on the intensity of the reflected signal.

In connection with the second embodiment of the first aspect, in a third embodiment of the first aspect, when the intensity of the incoming signal is invariable, one mapping table may be stored in the storage unit, and the remote controller may search for and obtain the distance value corresponding to the intensity of the reflected signal from the mapping table solely based on the intensity of the reflected signal.

In connection with the first aspect, in a fourth embodiment of the first aspect, a mapping table corresponding to time differences may be stored in a storage unit of the remote controller, and the mapping table may include a correspondence between the time differences and distance values;
the step of obtaining, by the remote controller, a distance value between the remote controller and the display device based on a status difference between statuses of the incoming signal and the reflected signal may include a step of:
obtaining, by the remote controller, the mapping table corresponding to the time differences stored in the storage unit, and searching for and obtaining the distance value corresponding to the time difference between a time point when the incoming signal is transmitted and a time point when the reflected signal is received from the mapping table based on the time difference.

In connection with the first aspect, or the first embodiment of the first aspect, or the second embodiment of the first aspect, or the third embodiment of the first aspect, or the fourth embodiment of the first aspect, in a fifth embodiment of the first aspect, the display parameters may include: backlight brightness, screen brightness, contrast, scanning frequency or refresh rate.

In connection with the first aspect, in a sixth embodiment of the first aspect, the display device may be a three dimensional (3D) display device, and may include a first receiving module and a second receiving module which are arranged at different locations;
in addition to adjusting the display parameters based on the distance value by the display device, the method further including steps of :
receiving, by the first receiving module and the second receiving module in the display device, the incoming signal transmitted by the remote controller respectively, and obtaining a status difference between the statuses of the incoming signal received by the first receiving module and the incoming signal received by the second receiving module;
obtaining, by the display device, an angle which corresponds to the status difference and represents an orientation of the remote controller, and adjusting an intensity for left-eye images and an intensity for right-eye images respectively based on the angle.

In connection with the sixth embodiment of the first aspect, in a seventh embodiment of the first aspect, the display parameters may include a depth of field; and
the display device may adjust the depth of field based on the distance value.

In connection with the first aspect, in en eighth embodiment of the first aspect, the method may further include:
adjusting, by the display device, audio parameters based on the distance value, wherein the audio parameters include: volumes, audio effects or sound channels.

In connection with the first aspect, or the first embodiment of the first aspect, or the second embodiment of the first aspect, or the third embodiment of the first aspect, or the fourth embodiment of the first aspect, or the sixth embodiment of the first aspect, or the seventh embodiment of the first aspect, or the eighth embodiment of the first aspect, in a ninth embodiment of the first aspect, both the incoming signal and the reflected signal may be infrared signals; or both the incoming signal and the reflected signal may be ultrasonic signals.

In a second aspect of the present disclosure, it is provided a remote controller, including:
a transmitting module configured to transmit an incoming signal to an display device;
a receiving module configured to receive a signal reflected by the display device;
a controlling module configured to obtain a distance value between the remote controller and the display device based on a status difference between statuses of the incoming signal and the reflected signal; and
a distance value transmitting module configured to transmit the distance value obtained by the controlling module to the display device, so that the display device adjusts display parameters based on the distance value.

In connection with the second aspect, in a first embodiment of the second aspect,
the controlling module may be further configured to calculate the distance value between the remote controller and the display device based on an intensity difference between an intensity of the incoming signal transmitted by the transmitting module and an intensity of the reflected signal received by the receiving module; or calculate the distance value between the remote controller and the display device based on a time difference between a time point when the incoming signal is transmitted by the transmitting module and a time point when the reflected signal is received by the receiving module.

In connection with the second aspect, in a second embodiment of the second aspect, both the incoming signal and the reflected signal may be infrared signals, and the remote controller may further include a first lens and a second lens which are arranged at a front end of the remote controller; wherein the first lens may be arranged at a side opposite to the transmitting module, so that the incoming signal is transmitted in a straight direction; and the second lens may be arranged at a side opposite to the receiving module, so that the reflected signal is converged.

In connection with the second aspect, or the first embodiment of the second aspect, or the second embodiment of the second aspect, in a third embodiment of the second aspect, the remote controller may further include: a storage unit configured to store mapping tables in one-to-one correspondence with intensities of different incoming signals, wherein each of the mapping tables may include a correspondence between intensities of the reflected signal and distance values;
wherein the controlling module may be further configured to obtain a mapping table corresponding to the intensity of the incoming signal from the mapping tables stored in the storage unit based on the intensity of the incoming signal, and search for and obtain the distance value corresponding to the intensity of the reflected signal from the obtained mapping table based on the intensity of the reflected signal.

In connection with the third embodiment of the second aspect, in a fourth aspect of the second aspect, when the intensity of the incoming signal is invariable, one mapping table may be stored in the storage unit.

In connection with the second aspect, or the first embodiment of the second aspect, or the second embodiment of the second aspect, in a fifth embodiment of the second aspect, the remote controller may further include: a storage unit configured to store a mapping table corresponding to time differences, wherein the mapping table may include a correspondence between the time differences and distance values;
the controlling module may be further configured to obtain the mapping table corresponding to the time differences stored in the storage unit, and search for and obtain the distance value corresponding to the time difference between a time point when the incoming signal is transmitted and a time point when the reflected signal is received from the mapping table based on the time difference.

In a third aspect of the present disclosure, it is provided a display device, including:
a signal reflecting module configured to reflect an incoming signal transmitted by a remote controller to obtain a reflected signal;
a distance value receiving module configured to receive a distance value transmitted by the remote controller; and
a display parameter adjusting module configured to adjust display parameters based on the distance value received by the distance value receiving module.

In connection with the third aspect, in a first embodiment of the third aspect, the display device may be a three dimensional (3D) display device, and may further include: a main controlling module, and a first receiving module and a second receiving module which are arranged at two sides of a front end of the display device;
wherein both the first receiving module and the second receiving module may be configured to receive the incoming signal transmitted by the remote controller;
the main controlling module may be configured to obtain a status difference between the statuses of the incoming signal received by the first receiving module and the incoming signal received by the second receiving module, and obtain an angle which corresponds to the status difference and represents an orientation of the remote controller; and
the display parameter adjusting module may be further configured to adjust an intensity for left-eye images and an intensity for right-eye images respectively based on the angle.

In connection with the third aspect, or the first embodiment of the third aspect, in a second embodiment of the third aspect, the display device may further include: an audio parameter adjusting module;
the audio parameter adjusting module may be configured to adjust audio parameters based on the distance value.

### (3) ADVANTAGEOUS EFFECTS

The embodiments of the present disclosure at least achieves the following advantageous effects:
The present disclosure provides a method for adjusting display parameters, a remote controller and a display device. As opposed to adjusting the display parameters by a viewer manually in the related art, the present disclosure provides a solution that, when a viewer operates the display device in any manner by the remote controller, for example in a case of a television (TV) station switching operation, the remote controller may calculate and obtain a distance value between the remote controller and the display device based on the difference between parameters of the incoming signal induced by the operation and the signal reflected by the display device, so that the display device may adjust the display parameters based on the distance value to achieve an improved display effect, and relieve the viewer from manually adjusting the display parameters to some extent.

### BRIEF DESCRIPTION OF THE DRAWINGS

In order to illustrate the technical solutions of the present disclosure or the related art in a clearer manner, the drawings desired for the embodiments will be described briefly hereinafter. Obviously, the following drawings merely relate to some embodiments of the present disclosure, and based on these drawings, a person skilled in the art may obtain the other drawings without any creative effort.
Fig. 1 is a flowchart of a method for adjusting the display device according to an exemplary embodiment of the present disclosure;
Fig. 2 is a flowchart of another method for adjusting the display device according to an exemplary embodiment of the present disclosure;
Fig. 3 illustrates a remoter controller according to an exemplary embodiment of the present disclosure;
Fig. 4 illustrates another remoter controller according to an exemplary embodiment of the present disclosure;
Fig. 5 illustrates a display device according to an exemplary embodiment of the present disclosure; and
Fig. 6 illustrates another display device according to an exemplary embodiment of the present disclosure.

### Reference Signs:

30: remote controller, 31: transmitting module,
32: receiving module, 33: controlling module,
34: distance value transmitting module, 35: first lens,
36: second lens, 37: storage unit,
50: display device, 51: signal reflecting module,
52: distance value receiving module, 53: display parameter adjusting module,
54: main controlling module, 55: first receiving module,
56: second receiving module, 57: audio parameter adjusting module.

### DETAILED DESCRIPTION

The present disclosure will be described hereinafter in conjunction with the drawings and embodiments. The following embodiments are for illustrative purposes only, but shall not be used to limit the scope of the present disclosure.

In order to make the objects, the technical solutions and the advantages of the present disclosure more apparent, some technical solutions of the present disclosure will be described hereinafter in a clear and complete manner in conjunction with the drawings and embodiments. Obviously, the following embodiments are merely a part of, rather than all of, the embodiments of the present disclosure, and based on these embodiments, a person skilled in the art may obtain the other embodiments, which also fall within the scope of the present disclosure.

Unless otherwise defined, any technical or scientific term used herein shall have the common meaning understood by a person of ordinary skills. Such words as "first" and "second" used in the specification and claims are merely used to differentiate different components rather than to represent any order, number or importance. Similarly, such words as "one" or "a" are merely used to represent the existence of at least one member, rather than to limit the number thereof. Such words as "connect" or "connected to" may include electrical connection, direct or indirect, rather than to be limited to physical or mechanical connection. Such words as "on", "under", "left" and "right" are merely used to represent relative position relationship, and when an absolute position of the object is changed, the relative position relationship will be changed too.

In the following, the principle and features of the embodiments of the present disclosure will be described in association with the figures, in which the embodiments are intended to illustrate the present disclosure, rather than confine the scope of the present disclosure.

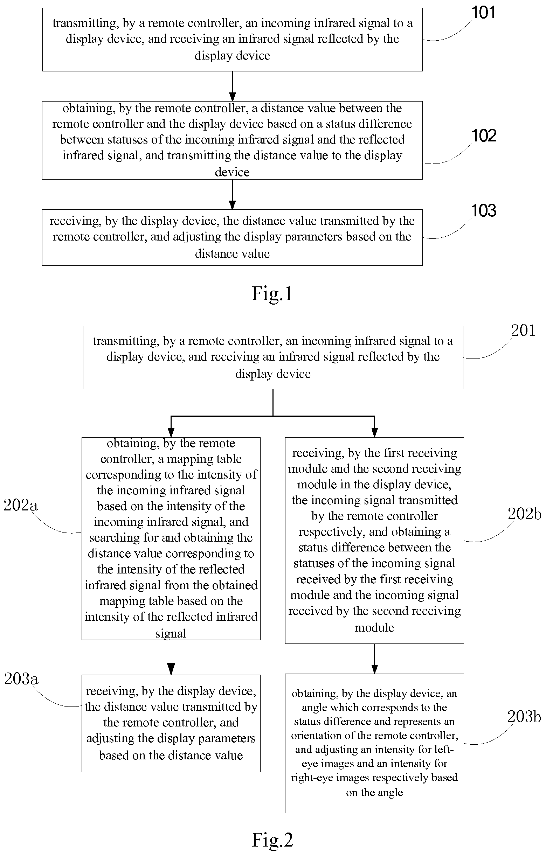

As illustrated in the flowchart of Fig. 1, the present disclosure provides a method for adjusting the display parameters to relieve a viewer from manually adjusting the display parameters, including the following steps:
Step 101: transmitting, by a remote controller, an incoming signal to a display device, and receiving a signal reflected by the display device.

The incoming signal may be a signal that is transmitted to the display device by the viewer via the remote controller for operating the display device, and the operation of the viewer may include a TV station switching operation or a volume adjusting operation. Alternatively, the incoming signal may be a signal that is transmitted to the display device by the viewer by pressing an auto adjusting button on the remote controller for operating the display device, and the auto adjusting button is configured for adjusting each of the display parameters on the remote controller.

It is noted that, when the incoming signal transmitted by the remote controller arrives at any surface of the display device, the incoming signal is reflected instantly, and the reflected signal is transmitted to the remote controller.

Alternatively, both the incoming signal and the reflected signal may be infrared signals; or both the incoming signal and the reflected signal may be ultrasonic signals.
Step 102: obtaining, by the remote controller, a distance value between the remote controller and the display device based on a status difference between statuses of the incoming signal and the reflected signal, and transmitting the distance value to the display device.

Alternatively, the step 102 may specifically include: calculating, by the remote controller, the distance value between the remote controller and the display device based on an intensity difference between an intensity of the incoming signal being transmitted and an intensity of the reflected signal being received; or In this embodiment, the intensity of the transmitted signal varies as the distance value varies. Thus, a corresponding distance value may be uniquely determined according to the intensity difference between the intensity of the incoming signal and the intensity of the reflected signal.

Alternatively, the step 102 may specifically include: calculating, by the remote controller, the distance value between the remote controller and the display device based on a time difference between a time point when the incoming signal is transmitted and a time point when the reflected signal is received. In this embodiment, the time point when the transmitted signal is received varies as the distance value varies. Thus, a corresponding distance value may be uniquely determined according to the time difference between the time point when the incoming signal is transmitted and the time point when the reflected signal is received.
Step 103: receiving, by the display device, the distance value transmitted by the remote controller, and adjusting the display parameters based on the distance value.

The display parameters may specifically include: backlight brightness, screen brightness, contrast, scanning frequency, refresh rate, and so on. In this embodiment, as the distance value is greater, the corresponding backlight brightness is higher, the corresponding screen brightness is higher, the corresponding contrast is higher, the corresponding scanning rate is faster, or the corresponding refresh rate is faster.

An embodiment of the present disclosure provides a method for adjusting display parameters. As opposed to adjusting the display parameters by a viewer manually in the related art, the present disclosure provides a solution that, when a viewer operates the display device in any manner by the remote controller, for example in a case of a television (TV) station switching operation, the remote controller may calculate and obtain a distance value between the remote controller and the display device based on the difference between parameters of the incoming signal induced by the operation and the signal reflected by the display device, so that the display device may adjust the display parameters based on the distance value to achieve an improved display effect, and relieve the viewer from manually adjusting the display parameters to some extent.

Fig.2 illustrates another method for adjusting the display parameters according to the embodiments of the present disclosure for further explaining the method as illustrated in Fig.1. The method shown in Fig.2 includes the following steps.
Step 201: transmitting, by a remote controller, an incoming signal to a display device, and receiving a signal reflected by the display device.

The incoming signal may be a signal that is transmitted to the display device by a viewer via the remote controller for operating the display device, and the operation of the viewer may include a TV station switching operation or a volume adjusting operation. Alternatively, the incoming signal may be a signal that is transmitted to the display device by a viewer by pressing an auto adjusting button on the remote controller for operating the display device, and the auto adjusting button is configured for adjusting each of the display parameters on the remote controller.

It is noted that, when the incoming signal transmitted by the remote controller arrives at any surface of the display device, the incoming signal is reflected instantly, and the reflected signal is transmitted to the remote controller.

Alternatively, both the incoming signal and the reflected signal are infrared signals; or both the incoming signal and the reflected signal are ultrasonic signals.
Step 202a: obtaining, by the remote controller, a mapping table corresponding to the intensity of the incoming signal from the mapping tables stored in the storage unit based on the intensity of the incoming signal, and searching for and obtaining the distance value corresponding to the intensity of the reflected signal from the obtained mapping table based on the intensity of the reflected signal.

In this embodiment, mapping tables in one-to-one correspondence with intensities of different incoming signals are stored in a storage unit of the remote controller in advance, and each of the mapping tables includes a correspondence between intensities of the reflected signal and distance values. a mapping table corresponding to the intensity of the incoming signal is obtained by the remote controller from the mapping tables stored in the storage unit based on the intensity of the incoming signal, and the distance value corresponding to the intensity of the reflected signal is searched for and obtained from the obtained mapping table based on the intensity of the reflected signal. Thus, a variety of user demands corresponding to different intensities of the incoming signal in different scenes can be met. Each of the mapping tables includes a correspondence between intensities of the reflected signal and distance values. The mapping tables in one-to-one correspondence with intensities of different incoming signals may be obtained by a great deal of learning in advance and stored in the remote controller.

Furthermore, when the intensity of the incoming signal is invariable, one mapping table is stored in the storage unit, and the remote controller searches for and obtains the distance value corresponding to the intensity of the reflected signal from the mapping table solely based on the intensity of the reflected signal.

To relieve the remote controller from a great deal of real time calculation and improve the efficiency of calculating the distance value, the intensity of the incoming signal may be invariable. At this point, only one mapping table is stored in the storage unit, and the remote controller searches for and obtains the distance value corresponding to the intensity of the reflected signal from the mapping table solely based on the intensity of the reflected signal.

Alternatively, the step 202a may include: obtaining, by the remote controller, the mapping table corresponding to the time differences stored in the storage unit, and searching for and obtaining the distance value corresponding to the time difference between a time point when the incoming signal is transmitted and a time point when the reflected signal is received from the mapping table based on the time difference. The mapping table corresponding to time differences is stored in the storage unit of the remote controller in advance, and the mapping table includes the correspondence between time differences and distance values.

A step 203a is executed after step 202a, including: receiving, by the display device, the distance value transmitted by the remote controller, and adjusting the display parameters based on the distance value.

The display parameters may specifically include: backlight brightness, screen brightness, contrast, scanning frequency, refresh rate, and so on. In this embodiment, as the distance value is greater, the corresponding backlight brightness is higher, the corresponding screen brightness is higher, the corresponding contrast is higher, the corresponding scanning rate is faster, or the corresponding refresh rate is faster.

Alternatively, when the display device is a three dimensional (3D) display device, the display parameters further includes the depth of field. At this point, the step 203a may specifically include: adjusting the depth of field based on the distance value.

Alternatively, the display device may further adjust audio parameters based on the distance value. The audio parameters may include: volumes, audio effects or sound channels.

A step 202b may be executed in parallel with the execution of the step 202a, including: receiving, by the first receiving module and the second receiving module in the display device, the incoming signal transmitted by the remote controller respectively, and obtaining a status difference between the statuses of the incoming signal received by the first receiving module and the incoming signal received by the second receiving module.

The status difference may be a time difference between a time point when the incoming signal is received by the first receiving module and a time point when the incoming signal is received by the second receiving module.

In this embodiment, the display device is a three dimensional (3D) display device, and includes a first receiving module and a second receiving module which are arranged at different locations.

A step 203b is executed after the step 202b, including: obtaining, by the display device, an angle which corresponds to the status difference and represents an orientation of the remote controller, and adjusting an intensity for left-eye images and an intensity for right-eye images respectively based on the angle.

In this embodiment, the experience of a viewer upon watching the 3D display may be improved by adjusting the intensity for the left-eye images and the intensity for the right-eye images based on the angle by the display device. For example, when the viewer is located at a front and left position relative to the display device, the right-eye images need to be enhanced to improve the 3D watching experience. On the other hand, when the viewer is located at a front and right position relative to the display device, the left-eye images need to be enhanced to improve the 3D watching experience.

An embodiment of the present disclosure provides another method for adjusting display parameters. As opposed to adjusting the display parameters by a viewer manually in the related art, the present disclosure provides a solution that, when a viewer operates the display device in any manner by the remote controller, for example in a case of a television (TV) station switching operation, the remote controller may calculate and obtain a distance value between the remote controller and the display device based on the difference between parameters of the incoming signal induced by the operation and the signal reflected by the display device, so that the display device may adjust the display parameters based on the distance value to achieve an improved display effect, and relieve the viewer from manually adjusting the display parameters to some extent.

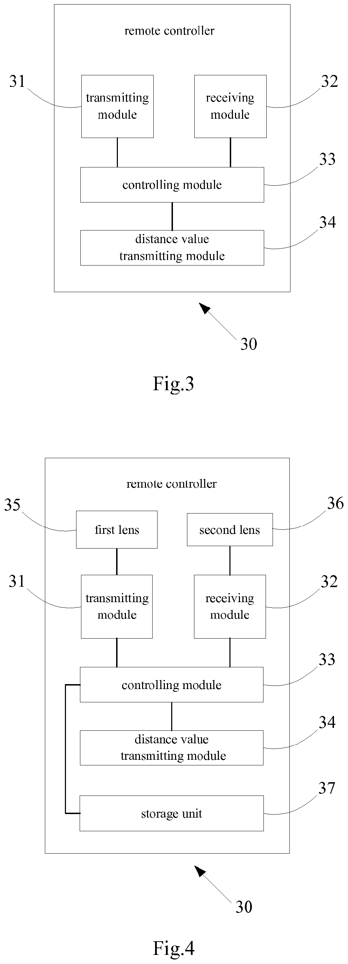

In another embodiment, the present disclosure further provides a remote controller 30 for intelligently adjusting the display parameters. As illustrated in Fig.3, the remote controller 30 includes: a transmitting module 31, a receiving module 32, a controlling module 33 and a distance value transmitting module 34.

In another embodiment of the present disclosure:
the transmitting module 31 is configured to transmit an incoming signal to an display device 50.

The receiving module 32 is configured to receive a signal reflected by the display device 50.

The controlling module 33 is configured to obtain a distance value between the remote controller 30 and the display device 50 based on a status difference between statuses of the incoming signal transmitted by the transmitting module 31 and the reflected signal received by the receiving module 32.

The distance value transmitting module 34 is configured to transmit the distance value obtained by the controlling module 33 to the display device 50, so that the display device 50 adjusts display parameters based on the distance value.

The embodiment of the present disclosure provides a solution that, when the viewer operates the display device 50 in any manner by the remote controller 30, for example in a case of a television (TV) station switching operation, the remote controller 30 may calculate and obtain a distance value between the remote controller 30 and the display device 50 based on the difference between parameters of the incoming signal induced by the operation and the signal reflected by the display device 50. As a result, the display device 50 may adjust the display parameters based on the distance value to achieve the satisfying display effect, and relieve the viewer from manually adjusting the display parameters to some extent.

The present disclosure provides another embodiment based on the above embodiments as a solution for calculating the distance value between the remote controller 30 and the display device 50 by the controlling module 33, including:
the controlling module 33 is configured to calculate the distance value between the remote controller 30 and the display device 50 based on an intensity difference between intensities of the incoming signal transmitted by the transmitting module 31 and the reflected signal received by the receiving module 32. Alternatively, the controlling module 33 is configured to calculate the distance value between the remote controller 30 and the display device 50 based on a time difference between the time point when the incoming signal is transmitted by the transmitting module 31 and the time point when the reflected signal is received by the receiving module 32.

The present disclosure provides another embodiment for converging the incoming signal transmitted by the transmitting module 31 and the reflected signal received by the receiving module 32. As illustrated in Fig.4, in this embodiment, the remote controller 30 further includes a first lens 35 and a second lens 36 which are arranged at a front end of the remote controller 30. The first lens 35 is arranged at a side opposite to the transmitting module 31, so that the incoming signal is transmitted in a straight direction. The second lens 36 is arranged at a side opposite to the receiving module 32, so that the reflected signal is converged At this point, both the incoming signal and the reflected signal are infrared signals.

The present disclosure provides another embodiment as an alternative solution for obtaining the distance value between the remote controller and the display device by the controlling module 33. As illustrated in Fig.4, in this embodiment, the remote controller 30 further includes a storage unit 37.

The storage unit 37 is configured to store mapping tables in one-to-one correspondence with intensities of different incoming signals, wherein each of the mapping tables includes the correspondence between intensities of the reflected signal and distance values.

The controlling module 33 is further configured to obtain a mapping table corresponding to the intensity of the incoming signal from the mapping tables stored in the storage unit 37 based on the intensity of the incoming signal, and search for and obtain the distance value corresponding to the intensity of the reflected signal from the obtained mapping table based on the intensity of the reflected signal.

It is to relieve the remote controller 30 from real time calculation and improve the efficiency of calculating the distance value. The present disclosure provides another embodiment based on the above embodiments, in which only one mapping table is stored in the storage unit 37 when the intensity of the incoming signal is invariable.

The present disclosure provides another embodiment based on the above embodiments as a solution for obtaining the distance value between the remote controller and the display device by the controlling module 33, in which:
the storage unit 37 is configured to store the mapping table corresponding to the time differences, wherein the mapping table includes the correspondence between the time differences and distance values.

The controlling module 33 is configured to obtain the mapping table corresponding to the time differences stored in the storage unit 37, and searching for and obtaining the distance value corresponding to the time difference between the time point when the incoming signal is transmitted and the time point when the reflected signal is received from the mapping table based on the time difference.

It is noted that, in this embodiment of the present disclosure, respective units in the remote controller 30 are similar to those as illustrated in Fig.1 and Fig.2, and thus a description thereof is omitted herein for clarity.

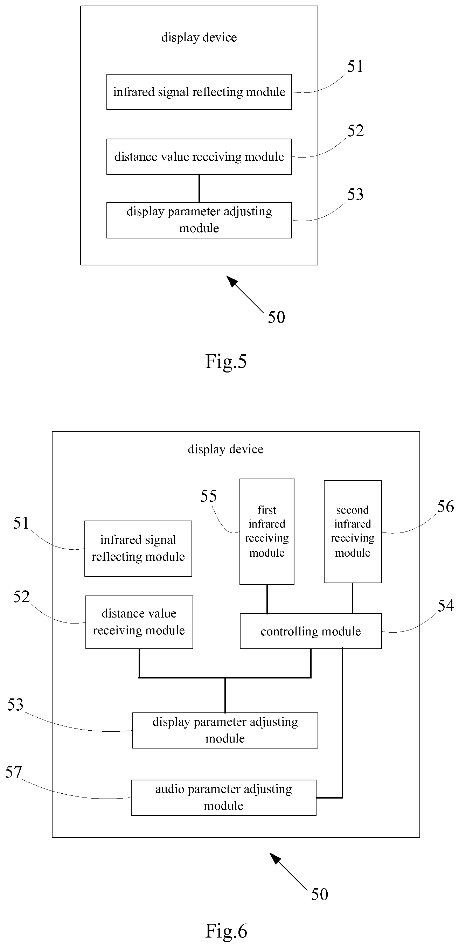

In another embodiment of the present disclosure, it is provided a display device 50 for intelligently adjusting the display parameters of the display device 50. As illustrated in Fig.5, the display device 50 includes: a signal reflecting module 51, a distance value receiving module 52 and a display parameter adjusting module 53.

The signal reflecting module 51 is configured to reflect an incoming signal transmitted by the remote controller 30 to obtain a reflected signal.
the distance value receiving module 52 is configured to receive a distance value transmitted by the remote controller 30.

The display parameter adjusting module 53 is configured to adjust display parameters based on the distance value received by the distance value receiving module 52.

In this embodiment of the present disclosure, the display device 50 provides a solution that, when the viewer operates the display device 50 in any manner by the remote controller 30, for example in a case of a TV station switching operation, the remote controller 30 may calculate and obtain a distance value between the remote controller 30 and the display device 50 based on the difference between parameters of the incoming signal induced by the operation and the signal reflected by the display device 50, so that the display device 50 may adjust the display parameters based on the distance value to achieve the improved display effect, and relieve the viewer from manually adjusting the display parameters.

When the display device 50 is a 3D display device and a viewer locates at a position which is not right opposite to the display device 50 (i.e., the viewer and the display device 50 have a deviation angle), both the left-eye images and the right-eye images for the viewer may be adversely affected to certain extents, and thus the 3D watching experience of the viewer deteriorates. To relieve the viewer from the deteriorated 3D watching experience due to the viewer's position which is not right opposite to the display device 50, the present disclosure provides another embodiment. In this embodiment, as illustrated in Fig.6, the display device 50 is a 3D display device, and further includes: a main controlling module 54, and a first receiving module 55 and a second receiving module 56 which are arranged at two sides of a front end of the display device 50.

Both the first receiving module 55 and the second receiving module 56 are configured to receive the incoming signal transmitted by the remote controller 30.

In particular, the main controlling module 54 is configured to obtain a status difference between the statuses of the incoming signal received by the first receiving module 55 and the incoming signal received by the second receiving module 56, and obtain an angle which corresponds to the status difference and represents an orientation of the remote controller 30. The status difference may be a time difference between a time point when the incoming signal is received by the first receiving module 55 and a time point when the incoming signal is received by the second receiving module 56.

The display parameter adjusting module 53 is further configured to adjust an intensity for the left-eye images and an intensity for the right-eye images respectively based on the angle.

In addition to relieve a viewer from manually adjusting the display parameters, the present disclosure provides another embodiment to relieve the viewer from manually adjusting audio parameters to some extents. As illustrated in Fig.6, in this embodiment, the display device 50 further includes: an audio parameter adjusting module 57 configured to adjust the audio parameters based on the distance value.

It is noted that, in this embodiment of the present disclosure, respective units in the display device 50 are similar to those as illustrated in Fig.1 and Fig.2, and thus a description thereof is omitted herein for clarity.

In the embodiment, the remote controller 30 and the display device 50 may implement the methods in the above embodiments. Those skilled in the art may understand the details of such implementation based on the description of the methods in the above embodiments. A description thereof is omitted herein for clarity. In the embodiments of the present disclosure, the method for adjusting the display parameters, the remote controller and the display device may be adapted to adjust the display parameters, but the present disclosure is not limited thereto.

A person skilled in the art may understand that, all or a portion of the procedures in the above methods may be implemented by computer programs running on corresponding hardware devices. Such computer programs may be stored in a computer readable storage medium, which may implement procedures of the methods in the above embodiments upon being executed. The storage medium may be a magnetic disk, an optical disk, a read only memory (ROM), a random access memory (RAM), and so on.

Some or all of the features, structures, materials or characteristics in the above embodiments may be combined in one or more embodiments where it is appropriate.

The above are merely embodiments of the present disclosure and shall not be used to limit the scope of the present disclosure. It should be noted that, a person skilled in the art may make improvements and modifications without departing from the principle of the present disclosure, and these improvements and modifications shall also fall within the scope of the present disclosure. Thus, a scope of the present disclosure is defined in the claims.

## Claims

1. A method for adjusting display parameters, comprising steps of:
transmitting, by a remote controller, an incoming signal to a display device, and receiving a signal reflected by the display device;
obtaining, by the remote controller, a distance value between the remote controller and the display device based on a status difference between statuses of the incoming signal and the reflected signal, and transmitting the distance value to the display device; and
receiving, by the display device, the distance value transmitted by the remote controller, and adjusting the display parameters based on the distance value.

2. The method according to claim 1, wherein the step of obtaining, by the remote controller, a distance value between the remote controller and the display device based on a statue difference between statuses of the incoming signal and the reflected signal comprises a step of:
calculating, by the remote controller, the distance value between the remote controller and the display device based on an intensity difference between an intensity of the incoming signal being transmitted and an intensity of the reflected signal being received; or
calculating, by the remote controller, the distance value between the remote controller and the display device based on a time difference between a time point when the incoming signal is transmitted and a time point when the reflected signal is received.

3. The method according to claim 1, wherein mapping tables in one-to-one correspondence with intensities of different incoming signals are stored in a storage unit of the remote controller, and each of the mapping tables comprises a correspondence between intensities of the reflected signal and distance values;
wherein the step of obtaining, by the remote controller, a distance value between the remote controller and the display device based on a status difference between statuses of the incoming signal and the reflected signal comprises a step of:
obtaining, by the remote controller, a mapping table corresponding to the intensity of the incoming signal from the mapping tables stored in the storage unit based on the intensity of the incoming signal, and searching for and obtaining the distance value corresponding to the intensity of the reflected signal from the obtained mapping table based on the intensity of the reflected signal.

4. The method according to claim 3, wherein when the intensity of the incoming signal is invariable, one mapping table is stored in the storage unit, and the remote controller searches for and obtains the distance value corresponding to the intensity of the reflected signal from the mapping table solely based on the intensity of the reflected signal.

5. The method according to claim 1, wherein a mapping table corresponding to time differences is stored in a storage unit of the remote controller, and the mapping table comprises a correspondence between the time differences and distance values;
the step of obtaining, by the remote controller, a distance value between the remote controller and the display device based on a status difference between statuses of the incoming signal and the reflected signal comprises a step of:
obtaining, by the remote controller, the mapping table corresponding to the time differences stored in the storage unit, and searching for and obtaining the distance value corresponding to the time difference between a time point when the incoming signal is transmitted and a time point when the reflected signal is received from the mapping table based on the time difference.

6. The method according to any one of claims 1-5, wherein the display parameters comprise: backlight brightness, screen brightness, contrast, scanning frequency or refresh rate.

7. The method according to claim 1, wherein the display device is a three dimensional (3D) display device, and comprises a first receiving module and a second receiving module which are arranged at different locations;
in addition to adjusting the display parameters based on the distance value by the display device, the method further comprising steps of :
receiving, by the first receiving module and the second receiving module in the display device, the incoming signal transmitted by the remote controller respectively, and obtaining a status difference between the statuses of the incoming signal received by the first receiving module and the incoming signal received by the second receiving module; and
obtaining, by the display device, an angle which corresponds to the status difference and represents an orientation of the remote controller, and adjusting an intensity for left-eye images and an intensity for right-eye images respectively based on the angle.

8. The method according to claim 7, wherein the display parameters comprise a depth of field; and
the display device adjusts the depth of field based on the distance value.

9. The method according to any one of claims 1-8, further comprising:
adjusting, by the display device, audio parameters based on the distance value, wherein the audio parameters comprise: volumes, audio effects or sound channels.

10. The method according to any one of claims 1-9, wherein both the incoming signal and the reflected signal are infrared signals; or both the incoming signal and the reflected signal are ultrasonic signals.

11. A remote controller, comprising:
a transmitting module configured to transmit an incoming signal to an display device;
a receiving module configured to receive a signal reflected by the display device;
a controlling module configured to obtain a distance value between the remote controller and the display device based on a status difference between statuses of the incoming signal and the reflected signal; and
a distance value transmitting module configured to transmit the distance value obtained by the controlling module to the display device, so that the display device adjusts display parameters based on the distance value.

12. The remote controller according to claim 11, wherein
the controlling module is further configured to calculate the distance value between the remote controller and the display device based on an intensity difference between an intensity of the incoming signal transmitted by the transmitting module and an intensity of the reflected signal received by the receiving module; or calculate the distance value between the remote controller and the display device based on a time difference between a time point when the incoming signal is transmitted by the transmitting module and a time point when the reflected signal is received by the receiving module.

13. The remote controller according to claim 11, wherein both the incoming signal and the reflected signal are infrared signals, and the remote controller further comprises a first lens and a second lens which are arranged at a front end of the remote controller; wherein the first lens is arranged at a side opposite to the transmitting module, so that the incoming signal is transmitted in a straight direction; and the second lens is arranged at a side opposite to the receiving module, so that the reflected signal is converged.

14. The remote controller according to any one of claims 11-13, further comprising: a storage unit configured to store mapping tables in one-to-one correspondence with intensities of different incoming signals, wherein each of the mapping tables comprises a correspondence between intensities of the reflected signal and distance values;
wherein the controlling module is further configured to obtain a mapping table corresponding to the intensity of the incoming signal from the mapping tables stored in the storage unit based on the intensity of the incoming signal, and search for and obtain the distance value corresponding to the intensity of the reflected signal from the obtained mapping table based on the intensity of the reflected signal.

15. The remote controller according to claim 14, wherein when the intensity of the incoming signal is invariable, one mapping table is stored in the storage unit.

16. The remote controller according to any one of claims 11-13, further comprising: a storage unit configured to store a mapping table corresponding to time differences, wherein the mapping table comprises a correspondence between the time differences and distance values;
wherein the controlling module is further configured to obtain the mapping table corresponding to the time differences stored in the storage unit, and search for and obtain the distance value corresponding to the time difference between a time point when the incoming signal is transmitted and a time point when the reflected signal is received from the mapping table based on the time difference.

17. A display device, comprising:
a signal reflecting module configured to reflect an incoming signal transmitted by a remote controller to obtain a reflected signal;
a distance value receiving module configured to receive a distance value transmitted by the remote controller; and
a display parameter adjusting module configured to adjust display parameters based on the distance value received by the distance value receiving module.

18. The display device according to claim 17, wherein the display device is a three dimensional (3D) display device, and further comprises: a main controlling module, and a first receiving module and a second receiving module which are arranged at two sides of a front end of the display device;
wherein both the first receiving module and the second receiving module are configured to receive the incoming signal transmitted by the remote controller;
wherein the main controlling module is configured to obtain a status difference between the statuses of the incoming signal received by the first receiving module and the incoming signal received by the second receiving module, and obtain an angle which corresponds to the status difference and represents an orientation of the remote controller; and
wherein the display parameter adjusting module is further configured to adjust an intensity for left-eye images and an intensity for right-eye images respectively based on the angle.

19. The display device according to claim 17 or 18, further comprising: an audio parameter adjusting module configured to adjust audio parameters based on the distance value.
